(19)

Europäisches
Patentamt

European
Patent Office

Office européen
des brevets

(11) **EP 3 334 163 A1**

# EUROPEAN PATENT APPLICATION
published in accordance with Art. 153(4) EPC

(43) Date of publication:
**13.06.2018 Bulletin 2018/24**

(21) Application number: **16833388.8**

(22) Date of filing: **08.08.2016**

(51) Int Cl.:
*H04N 19/90* (2014.01)   *H04N 19/124* (2014.01)
*H04N 19/176* (2014.01)   *H04N 19/91* (2014.01)
*H04N 19/44* (2014.01)   *H04N 19/13* (2014.01)
*H04N 19/105* (2014.01)

(86) International application number:
**PCT/KR2016/008707**

(87) International publication number:
**WO 2017/023152 (09.02.2017 Gazette 2017/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.08.2015 US 201562201597 P**

(71) Applicant: **LG Electronics Inc.**
**Yeongdeungpo-gu**
**Seoul 07336 (KR)**

(72) Inventors:
• **GULERYUZ, Onur G.**
**San Jose, California 95131 (US)**
• **EGILMEZ, Hilmi E.**
**San Jose, California 95131 (US)**
• **EHMANN, Jana**
**San Jose, California 95131 (US)**

(74) Representative: **Cabinet Plasseraud**
**66, rue de la Chaussée d'Antin**
**75440 Paris Cedex 09 (FR)**

(54) **DEVICE AND METHOD FOR PERFORMING TRANSFORM BY USING SINGLETON COEFFICIENT UPDATE**

(57)    The present invention provides a method for encoding a video signal, the method comprising: a step of selecting a transform parameter set via an optimization process for a target block, wherein the transform parameter set comprises a vertical transform set, a horizontal transform set and a transform order parameter set; a step of updating, on the basis of the selected transform parameter set, a transform block having a singleton coefficient, wherein the single ton coefficient represents a single coefficient obtained on the basis of the transform order parameter set; a step of obtaining a transform coefficient for the target block on the basis of the updated transform block; a step of quantizing the transform coefficient; and a step of entropy encoding the quantized transform coefficient.

FIG. 8

EP 3 334 163 A1

**Description**

[Technical Field]

The present invention relates to a method for encoding/decoding a video signal and, more particularly, to a technique of performing transform using singleton coefficient update in an encoder and a technique of performing inverse transform based on a transform to which a singleton coefficient update has been applied in a decoder.

[Background Art]

A compression encoding means a series of signal processing techniques for transmitting digitized information through a communication line or techniques for storing the information in a form that is proper for a storage medium. The media including a picture, an image, an audio, and the like may be the target for the compression encoding, and particularly, the technique of performing the compression encoding targeted to the picture is referred to as a video image compression

The next generation video contents are supposed to have the characteristics of high spatial resolution, high frame rate and high dimensionality of scene representation. In order to process such contents, drastic increase of memory storage, memory access rate and processing power will be resulted. Accordingly, it is required to design the coding tool for processing the next generation video contents efficiently.

In particular, in the related art video coding, a separable 2D discrete cosine transform (2D DCT) is typically used as block signals. A main disadvantage of using the 2D DCT is isotropic transform that cannot capture non-isotropic features of block data. Actually, image/video blocks may have various statistical properties depending on a prediction method such as inter/intra-prediction mode and video content. Thus, good compression gains may be achieved by using different transforms that may be adapted to the non-isotropic statistical features of the data blocks. A solution to this problem is to use non-separable transforms such as the Karhunen-Loeve transform (KLT). However, the KLT is not highly effective because of its high complexity. Thus, there is a need to design non-separable but low-complexity transforms derived by combining multiple transforms.

[Disclosure]

[Technical Problem]

An aspect of the present invention proposes a method for improving coding efficiency through a novel transform design.

Another aspect of the present invention proposes a method for designing low-complexity and non-isotropic transform.

Another aspect of the present invention proposes a method of designing transform using singleton update.

Another aspect of the present invention proposes a method for performing transform on each row and column within a block according to specific transform order.

Another aspect of the present invention proposes a novel encoder/decoder structure for reflecting a new transform design.

[Technical Solution]

The present invention provides a method for improving coding efficiency through a novel transform design.

The present invention provides a method of designing low-complexity and non-isotropic transforms using singleton updates.

The present invention provides a method for selecting a transform parameter set through an optimization process for a target block.

The present invention provides a method for updating a transform block with a singleton coefficient based on a transform parameter set.

The present invention provides a method for performing transform on each row and column within a block according to specific transform order.

The present invention provides a novel encoder/decoder structure for reflecting a novel transform design.

[Advantageous Effects]

According to embodiments of the present invention, coding efficiency may be enhanced through a novel transform design.

Also, since better compression is performed by obtaining non-isotropic features of a data block and different transform sets are applied to different portions of the block data in a separable manner, fast implementation with low complexity may be performed in high-resolution video codec.

[Description of Drawings]

FIG. 1 illustrates a schematic block diagram of an encoder for encoding a video signal, in accordance with one embodiment of the present invention.

FIG. 2 illustrates a schematic block diagram of a decoder for decoding a video signal, in accordance with one embodiment of the present invention.

FIG. 3 is a view illustrating a partition structure of a coding unit according to an embodiment to which the present invention is applied.

FIG. 4 is a view illustrating an input/output relationship for cases of performing a vertical transform and a horizontal transform on a data block according to an embodiment to which the present invention is applied.

FIGS. 5 and 6 are views illustrating a process of generating a transform coefficient by applying a vertical transform and a horizontal transform according to specific transform order according to an embodiment to which the present invention is applied.

FIG. 7 is a schematic internal block diagram of a directional transform unit which performs a vertical transform and a horizontal transform according to an embodiment to which the present invention is applied.

FIG. 8 is a schematic internal block diagram of a directional transform unit using singleton coefficient update according to an embodiment to which the present invention is applied.

FIG. 9 is a schematic internal block diagram of a singleton coefficient updating unit according to an embodiment to which the present invention is applied.

FIG. 10 illustrates an input/output relationship for cases of performing singleton vertical coefficient updating and singleton horizontal coefficient updating on a data block according to an embodiment to which the present invention is applied.

FIG. 11 is a schematic internal block diagram of a directional transform unit using transform selected based on a transform coefficient feedback according to an embodiment to which the present invention is applied.

FIG. 12 is a schematic internal block diagram of a directional transform unit using transform selected based on the additional information of a reference block used in inter-prediction according to an embodiment to which the present invention is applied.

FIG. 13 is a flow chart illustrating a method of performing transform using singleton coefficient update according to an embodiment to which the present invention is applied.

FIG. 14 is a flow chart illustrating a method of determining a transform parameter set using an optimization process according to an embodiment to which the present invention is applied.

FIG. 15 is a flow chart illustrating a method of performing inverse transform based on a transform to which a singleton coefficient update has been applied according to an embodiment to which the present invention is applied.

[Best Modes]

The present invention provides a method for encoding a video signal, including: selecting a transform parameter set via an optimization process for a target block, the transform parameter set including a vertical transform set, a horizontal transform set and a transform ordering parameter set; updating a transform block with a singleton coefficient based on the selected transform parameter set, the singleton coefficient indicating a single coefficient obtained by using the transform ordering parameter set; obtaining a transform coefficient for the target block based on the updated transform block; quantizing the transform coefficient; and entropy-encoding the quantized transform coefficient.

Also, in the present invention, the transform ordering parameter set may include at least one of a direction parameter, a position index parameter or a frequency parameter.

Also, in the present invention, the transform ordering parameter set may be selected based on mode information of the target block.

Also, in the present invention, if the mode information indicates a horizontal direction, a vertical transform may be first applied, and if the mode information indicates a vertical direction, a horizontal transform may be first applied.

Also, in the present invention, the updating may further include updating the transform block based on another transform ordering parameter set, wherein the transform coefficient may be obtained based on the updated transform block.

Also, in the present invention, the updating may be performed repeatedly by the number of parameters included in the transform parameter set.

Also, in the present invention, the optimization process may include: initializing the vertical transform set and the horizontal transform set; fixing the vertical transform set, updating a subset of the horizontal transform set, fixing the horizontal transform set, and subsequently updating a subset of the vertical transform set; and determining an optimized transform parameter set via covariance-based modeling.

Also, in the present invention, the updating order for the vertical transform set and the horizontal transform set may be selected based on mode information.

Also, the present invention provides a method for decoding a video signal, including: extracting at least one transform index for a target block from the video signal; deriving a transform parameter set corresponding to the transform index, the transform parameter set including a vertical transform set, a horizontal transform set and a transform ordering parameter set; and performing inverse-transform on the target block based on the transform parameter set.

Also, the present invention provides an apparatus for encoding a video signal, including: a transform selection unit configured to select a transform parameter set via an optimization process for a target block, the transform parameter set including a vertical transform set, a horizontal transform set and a transform ordering parameter set; an updating unit configured to update a transform block with a singleton coefficient based on the selected transform parameter set, the singleton coefficient indicating a single coefficient obtained by using the transform ordering parameter set; a transform performing unit configured to obtain a transform coefficient for the target block based on the updated transform block; a quantization unit configured to quantize the transform coefficient; and an entropy-encoding unit configured to entropy-encode the quantized transform coefficient.

Also, the present invention provides an apparatus for decoding a video signal, including: a parsing unit configured to extract at least one transform index for a target block from the video signal; and an inverse-transform unit configured to derive a transform parameter set corresponding to the transform index and perform inverse-transform on the target block based on the transform parameter set, wherein the transform parameter set includes a vertical transform set, a horizontal transform set and a transform ordering parameter set.

[Mode for invention]

Hereinafter, exemplary elements and operations in accordance with embodiments of the present invention are described with reference to the accompanying drawings, however, it is to be noted that the elements and operations of the present invention described with reference to the drawings are provided as only embodiments and the technical spirit and kernel configuration and operation of the present invention are not limited thereto.

Furthermore, terms used in this specification are common terms that are Furthermore, terms used in this specification are common terms that are now widely used, but in special cases, terms randomly selected by the applicant are used. In such a case, the meaning of a corresponding term is clearly described in the detailed description of a corresponding part. Accordingly, it is to be noted that the present invention should not be construed as being based on only the name of a term used in a corresponding description of this specification and that the present invention should be construed by checking even the meaning of a corresponding term.

Furthermore, terms used in this specification are common terms selected to describe the invention, but may be replaced with other terms for more appropriate analysis if such terms having similar meanings are present. For example, a signal, data, a sample, a picture, a frame, and a block may be properly replaced and interpreted in each coding process. Furthermore, partitioning, decomposition, splitting, division may also be properly replaced and interpreted in each coding process.

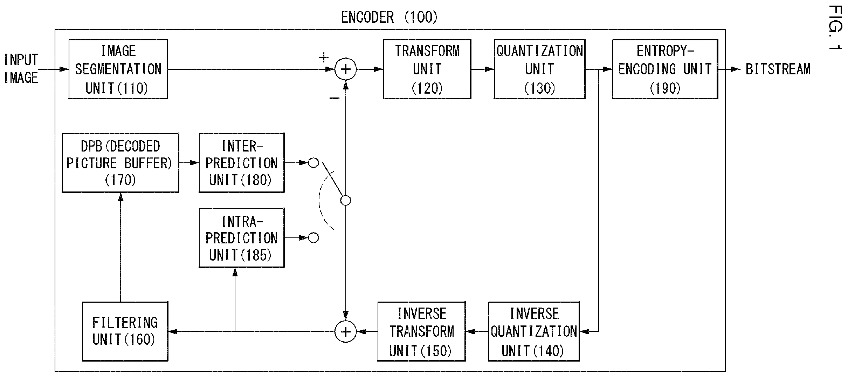

FIG. 1 illustrates a schematic block diagram of an encoder for encoding a video signal, in accordance with one embodiment of the present invention.

Referring to FIG. 1, an encoder 100 may include an image segmentation unit 110, a transform unit 120, a quantization unit 130, an inverse quantization unit 140, an inverse transform unit 150, a filtering unit 160, a DPB (Decoded Picture Buffer) 170, an inter-prediction unit 180, an intra-prediction unit 185 and an entropy-encoding unit 190.

The image segmentation unit 110 may divide an input image (or, a picture, a frame) input to the encoder 100 into one or more process units. For example, the process unit may be a coding tree unit (CTU), a coding unit (CU), a prediction unit (PU), or a transform unit (TU).

However, the terms are used only for convenience of illustration of the present disclosure. The present invention is not limited to the definitions of the terms. In this specification, for convenience of illustration, the term "coding unit" is employed as a unit used in a process of encoding or decoding a video signal. However, the present invention is not limited thereto. Another process unit may be appropriately selected based on contents of the present disclosure.

The encoder 100 may generate a residual signal by subtracting a prediction signal output from the inter-prediction unit 180 or intra-prediction unit 185 from the input image signal. The generated residual signal may be transmitted to the transform unit 120.

The transform unit 120 may apply a transform technique to the residual signal to produce a transform coefficient. The transform process may be applied to a pixel block having the same size of a square, or to a block of a variable size other than a square.

The present invention provides a method for improving coding efficiency through a novel transform design. For example, an encoder may design low-complexity and non-isotropic transform using singleton updating.

Further, the present invention may select a transform parameter set through an optimization process for a target block and update a transform block with a singleton coefficient based on the transform parameter set. In this case, transform may be performed on each row and column within the block in specific transform order. Specific embodiments thereof will be described in detail.

The quantization unit 130 may quantize the transform coefficient and transmits the quantized coefficient to the entropy-encoding unit 190. The entropy-encoding unit 190 may entropy-code the quantized signal and then output the entropy-coded signal as bitstreams.

The quantized signal output from the quantization unit 130 may be used to generate a prediction signal. For example, the quantized signal may be subjected to an inverse quantization and an inverse transform via the inverse quantization unit 140 and the inverse transform unit 150 in the loop respectively to reconstruct a residual signal. The reconstructed residual signal may be added to the prediction signal output from the inter-prediction unit 180 or intra-prediction unit 185 to generate a reconstructed signal.

On the other hand, in the compression process, adjacent blocks may be quantized by different quantization parameters, so that deterioration of the block boundary may occur. This phenomenon is called blocking artifacts. This is one of important factors for evaluating image quality. A filtering process may be performed to reduce such deterioration. Using the filtering process, the blocking deterioration may be eliminated, and, at the same time, an error of a current picture may be reduced, thereby improving the image quality.

The filtering unit 160 may apply filtering to the reconstructed signal and then outputs the filtered reconstructed signal to a reproducing device or the decoded picture buffer 170. The filtered signal transmitted to the decoded picture buffer 170 may be used as a reference picture in the inter-prediction unit 180. In this way, using the filtered picture as the reference picture in the inter-picture prediction mode, not only the picture quality but also the coding efficiency may be improved.

The decoded picture buffer 170 may store the filtered picture for use as the reference picture in the inter-prediction unit 180.

The inter-prediction unit 180 may perform temporal prediction and/or spatial prediction with reference to the reconstructed picture to remove temporal redundancy and/or spatial redundancy. In this case, the reference picture used for the prediction may be a transformed signal obtained via the quantization and inverse quantization on a block basis in the previous encoding/decoding. Thus, this may result in blocking artifacts or ringing artifacts.

Accordingly, in order to solve the performance degradation due to the discontinuity or quantization of the signal, the inter-prediction unit 180 may interpolate signals between pixels on a subpixel basis using a low-pass filter. In this case, the subpixel may refer to a virtual pixel generated by applying an interpolation filter. An integer pixel means an actual pixel existing in the reconstructed picture. The interpolation method may include linear interpolation, bi-linear interpolation and Wiener filter, etc.

The interpolation filter may be applied to the reconstructed picture to improve the accuracy of the prediction. For example, the inter-prediction unit 180 may apply the interpolation filter to integer pixels to generate interpolated pixels. The inter-prediction unit 180 may perform prediction using an interpolated block composed of the interpolated pixels as a prediction block.

Meanwhile, the intra-prediction unit 185 may predict a current block by referring to samples in the vicinity of a block to be encoded currently. The intra-prediction unit 185 may perform a following procedure to perform intra-prediction. First, the intra-prediction unit 185 may prepare reference samples needed to generate a prediction signal. Then, the intra-prediction unit 185 may generate the prediction signal using the prepared reference samples. Thereafter, the intra-prediction unit 185 may encode a prediction mode. At this time, reference samples may be prepared through reference sample padding and/or reference sample filtering. Since the reference samples have undergone the prediction and reconstruction process, a quantization error may exist. Therefore, in order to reduce such errors, a reference sample filtering process may be performed for each prediction mode used for intra-prediction

The prediction signal generated via the inter-prediction unit 180 or the intra-prediction unit 185 may be used to generate the reconstructed signal or used to generate the residual signal.

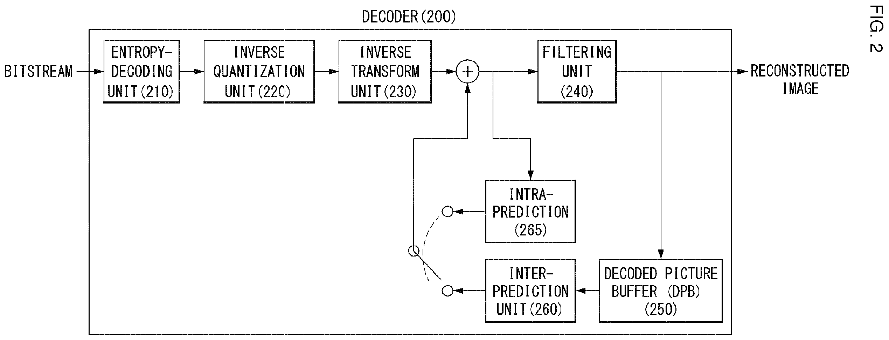

FIG. 2 illustrates a schematic block diagram of a decoder for decoding a video signal, in accordance with one embodiment of the present invention.

Referring to FIG. 2, a decoder 200 may include a parsing unit (not shown), an entropy-decoding unit 210, an inverse quantization unit 220, an inverse transform unit 230, a filtering unit 240, a decoded picture buffer (DPB) 250, an inter-prediction unit 260 and an intra-prediction unit 265.

A reconstructed video signal output from the decoder 200 may be reproduced using a reproducing device.

The decoder 200 may receive the signal output from the encoder as shown in FIG. 1. The received signal may be entropy-decoded via the entropy-decoding unit 210.

The inverse quantization unit 220 may obtain a transform coefficient from the entropy-decoded signal using quantization step size information.

The inverse transform unit 230 may inverse-transform the transform coefficient to obtain a residual signal.

A reconstructed signal may be generated by adding the obtained residual signal to the prediction signal output from the inter-prediction unit 260 or the intra-prediction unit 265.

The filtering unit 240 may apply filtering to the reconstructed signal and may output the filtered reconstructed signal to the reproducing device or the decoded picture buffer unit 250. The filtered signal transmitted to the decoded picture buffer unit 250 may be used as a reference picture in the inter-prediction unit 260.

In the present specification, the embodiments described in the transform unit 120 and the respective functional units of the encoder 100 may be equally applied to the inverse transform unit 230 and the corresponding functional units of the decoder, respectively.

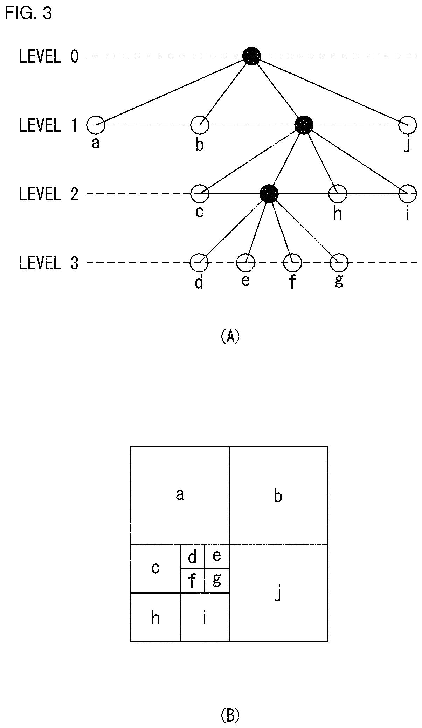

FIG. 3 is a diagram illustrating a partition structure of a coding unit according to an embodiment to which the present invention is applied.

An encoder may partition a single image (or picture) in a coding tree unit (CTU) of a rectangle shape, and encodes the CTU sequentially one by one according to a raster scan order

For example, a size of CTU may be determined by one of 64x64, 32x32 and 16x16, but the present invention is not limited thereto. The encoder may select and use the size of CTU according to resolution of an input image or the characteristics of the input image. The CTU includes a coding tree block (CTB) for a luma component and a CTB for two chroma components corresponding thereto.

One CTU may be partitioned into a quad tree structure. For example, one CTU may be divided into four units each having a square shape, the length of each side decreasing by half. Partitioning the QT structure may be performed recu rsively.

Referring to FIG. 3, a root node of a quad tree may relate to a CTU. The quad tree (QT) may be partitioned until it reaches a leaf node, and here, the leaf node may be referred to as a CU.

The CU may mean a basic unit of processing process of an input image, for example, the coding in which the intra/inter-prediction is performed. The CU may include a coding block (CB) for a luma component and the CB for two chroma components corresponding thereto. For example, a size of CU may be determined by any one of 64x64, 32x32, 16x16 and 8x8, but the present invention is not limited thereto and, in the case of a high-resolution image, the size of the CU may be increased or diversified.

Referring to FIG. 3, a CTU corresponds to a root node and has a smallest depth value (i.e., depth=0). The CTU may not be partitioned depending on characteristics of an input image, and in this case, the CTU corresponds to a CU

The CTU may be partitioned into a QT form, and as a result, lower nodes having a depth of level 1 are generated. A node (i.e., a leaf node) which is not partitioned any further from the lower node having the depth of level 1 corresponds to a CU. For example, in FIG. 3(b), CU(a), CU(b), and CU(j) corresponding to nodes a, b, and j have been once partitioned from a CTU and have the depth of level 1.

At least any one of the nodes having the depth of level 1 may be partitioned into a quad tree form again. Also, a node (i.e., leaf node) which cannot be partitioned any further from the lower node having a depth of level 2 corresponds to a CU. For example, in FIG. 3(b), CU(c), CU(h), and CU(i) corresponding to nodes c, h, and i have been partitioned twice and have the depth of level 2.

Also, at least any one of the nodes having the depth of level 2 may be partitioned again into a QT form. Also, a node (i.e., leaf node) which cannot be partitioned any further from the lower node having a depth of level 3 corresponds to a CU. For example, in FIG. 3(b), CU(d), CU(e), CU(f), and CU(g) corresponding to nodes d, e, f, and g have been partitioned three times from the CTU and have the depth of level 3.

In an encoder, a maximum size or a minimum size of a CU may be determined according to the characteristics of a video image (e.g., resolution) or in consideration of coding efficiency. Also, the information for this or the information that may derive this may be included in a bit stream. The CU having the maximum size may be referred to as a largest coding unit (LCU), and the CU having the minimum size may be referred to as a smallest coding unit (SCU).

In addition, the CU having a tree structure may be hierarchically partitioned with predetermined maximum depth information (or maximum level information). Also, each partitioned CU may have the depth information. Since the depth information represents a partitioned count and/or degree of a CU, the depth information may include the information of a size of CU.

Since the LCU is partitioned in a QT form, the size of SCU may be obtained using a size of the LCU and the maximum depth information. Or, conversely, the size of LCU may be obtained using a size of SCU and the maximum depth information of the tree.

Regarding a single CU, information indicating whether a corresponding CU is partitioned may be transferred to a decoder. For example, the information may be defined by a partition flag and may be expressed by a syntax element "split_cu_flat". The partition flag may be included in every CU excluding the SCU. For example, when a value of the partition flag is '1', the corresponding CU may be further partitioned into four CUs, and when the value of the partition flag is '0', the corresponding CU is not partitioned any further and a coding process for the corresponding CU may be performed.

In the embodiment of FIG. 3, the process of partitioning a CU has been described as an example, and the QT structure described above may also be applied to a process of partitioning a transform unit (TU) as a basic unit for performing transform.

The TU may be hierarchically partitioned from the CU to a QT structure. For example, a CU may correspond to a root node of a tree for a transform unit (TU).

Since the TU is partitioned into the QT structure, the TUs partitioned from the CU may be further partitioned into smaller lower TUs. For example, a size of the TU may be determined to any one of 32x32, 16x16, 8x8, or 4x4, but the present invention is not limited thereto. In the case of a high-resolution image, the size of the TU may further be increased or diversified.

Regarding one TU, information indicating whether or not the TU is partitioned may be transmitted to the decoder. For example, the information may be defined as a split transform flag and may be expressed as a syntax element "split_transform_flag".

The split transform flag may be included in every TU excluding a TU having a minimum size. For example, if a value of the split transform flag is '1', the corresponding TU is partitioned into four TUs again, and if the value of the split transform flag is '0', the corresponding TU is not partitioned any further.

As described above, the CU is a basic unit of coding in which intra-prediction or inter-prediction is performed. In order to more effectively code the input image, the CU may be partitioned into prediction unit (PU) units.

A PU is a basic unit for generating a prediction block, and even in one CU, different prediction blocks may be generated in units of PU. The PU may be partitioned differently depending on whether the intra-prediction mode or the inter-prediction mode is used as a coding mode of the CU to which the PU belongs.

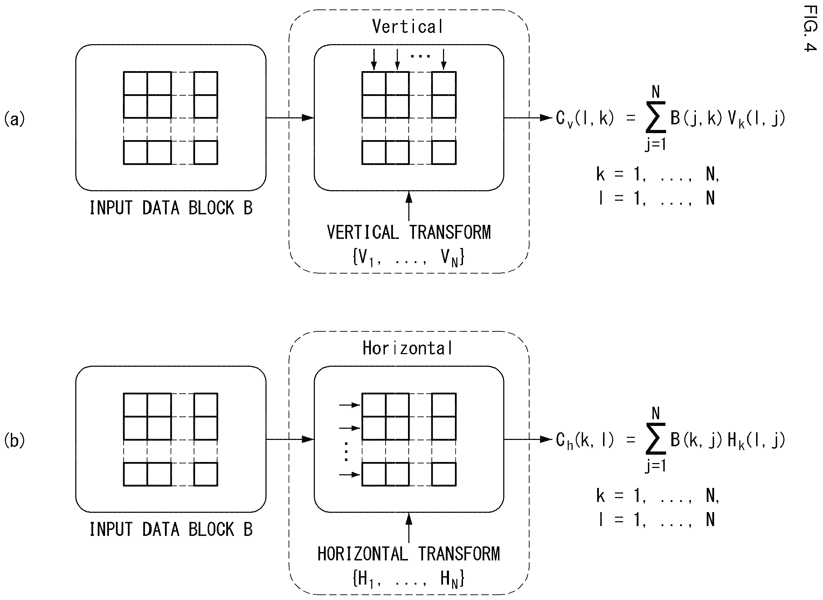

FIG. 4 is a view illustrating an input/output relationship for cases of performing a vertical transform and a horizontal transform on a data block according to an embodiment to which the present invention is applied.

The present invention discloses low-complexity, non-isotropic transforms. Embodiments of the present invention may be used as a certain video codec which implements transform coding.

The present invention provides a method for designing low-complexity and non-isotropic transforms using singleton updating.

The present invention may select a transform parameter set through an optimization process for a target block and update the transform block with a singleton coefficient based on the transform parameter set. Here, the singleton coefficient may refer to a single coefficient obtained based on a transform ordering parameter set.

Also, the present invention provides a method for performing a transform on each row and column within a block according to specific transform order.

For example, an encoder may present methods for designing non-separable but low-complexity transforms derived by combining multiple transforms, and here, each transform may be designed for a particular portion of the block. The encoder may preferentially design two sets of transform regarding rows and columns of the block using an optimization procedure. Also, transform may be performed by transforming each row and column of the block having the specific transform order.

In this manner, a method of performing transform using singleton coefficient update in this disclosure will be referred to as generalized incremental transforms with singleton updates (GITSU).

Hereinafter, vertical and horizontal transforms to be a basic formation block of the GITSU will be described. The entire transform T (rows are basis vectors) may be derived based on a transform parameter set. The transform parameter set may include at least one of a vertical transform set, a horizontal transform set, and a transform ordering parameter set.

- Vertical transform set: $(\mathbf{v}_1, \mathbf{v}_2, ..., \mathbf{v}_N\}$

- Horizontal transform set: $\{\mathbf{H}_1, \mathbf{H}_2, ..., \mathbf{H}_N\}$

- Transform ordering parameter set: $\mathbf{s} = \{0, 1\}$

The transform parameter set may be selected or determined based on an optimization procedure (to be described hereinafter) in this disclosure. In another embodiment, the encoder may define a transform index corresponding to the transform parameter set and transmit the same to a decoder.

The transform ordering parameter set refers to a set of pieces of information indicating transform order, and in the case of actually indicating transform order, any one of the transform ordering parameter sets may be used. In this case, the any one value may be referred to as a transform order parameter. For example, when the transform ordering parameter set is expressed as S, S may have a value of 0 or 1, and when S=1, it may refer to order of first applying a vertical transform and subsequently applying a horizontal transform, and when S=0, it may refer to order of first applying a horizontal transform and subsequently applying a vertical transform. The present invention is not limited thereto and the inverse case may also be applied. Alternatively, the transform ordering parameter set may be defined by three or more values.

Assuming that the vertical transform set and the horizontal transform set are given, FIG. 4 illustrates a process of outputting a vertical transform coefficient or a horizontal transform coefficient by applying the vertical transform set or the horizontal transform set to an input data block B.

For example, referring to FIG. 4(a), it may be seen that the vertical transform set is applied to the input data block B to generate a vertical transform coefficient $C_v(l,k)$. This may be expressed by Equation 1 below.

[Equation 1]

$$C_v(l,k) = \sum_{j=1}^{N} B(j,k) V_k(l,j)$$

Here, k = 1,... , N and l = 1,... , N. Referring to FIG. 4(a), the vertical transform $V_k$ may be applied to a kth column.

Referring to FIG. 4(b), it may be seen that the horizontal transform set is applied to the input data block B to generate a horizontal transform coefficient $C_h(k,l)$. This may be expressed by Equation 2 below.

[Equation 2]

$$C_h(k,l) = \sum_{j=1}^{N} B(k,j) H_k(l,j)$$

Here, k = 1,... , N and l = 1,... , N. Referring to FIG. 4(b), the horizontal transform $H_k$ may be applied to a kth row.

Through this process, the entire transform T may be generated by applying the vertical transform and the horizontal transform based on the specific transform order. For example, the specific transform order may refer to a case of applying the vertical transform first and then applying the horizontal transform or a case of applying the horizontal transform first and then applying the vertical transform. The specific transform order may correspond to the transform ordering parameter set and may be determined by the transform ordering parameter set, for example.

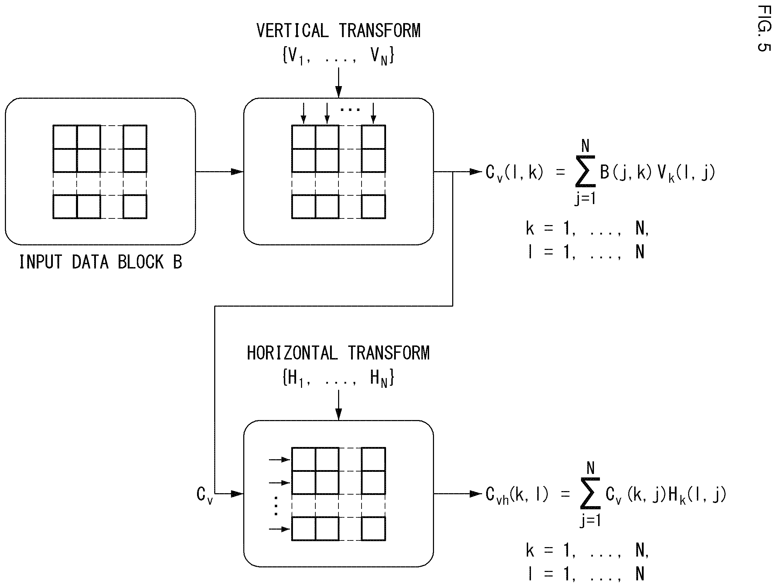

Specific embodiments thereof will be described in more detail hereinafter with reference to FIGS. 5 to 6.

FIGS. 5 to 6 are diagrams illustrating a process of generating a transform coefficient by applying a vertical transform and a horizontal transform according to specific transform order according to embodiments to which the present invention is applied.

Referring to FIG. 5, the present invention illustrates an embodiment of generating a transform coefficient by applying a vertical transform set first and then applying a horizontal transform set. For example, it may refer to a case where a value of the transform parameter set is S=1.

When an input data block B is given and a vertical transform set {V1,..., , VN} is applied, a vertical transform coefficient $C_v(l,k)$ may be generated by Equation 3 below.

[Equation 3]

$$C_v(l,k) = \sum_{j=1}^{N} B(j,k) V_k(l,j)$$

Here, k = 1,... , N, l = 1,... , N. Referring to FIG. 5, the vertical transform $V_k$ may be applied to the kth column.

The vertical transform coefficient $C_v(l,k)$ calculated by Equation 3 may be an input value for applying a horizontal transform. When the horizontal transform set {$H_1$, ..., $H_N$} is applied to the vertical transform coefficient $C_v(l,k)$, the vertical/horizontal transform coefficient $C_{vh}(k,l)$ may be generated by Equation 4. In this disclosure, a transform coefficient calculated by applying the horizontal transform after the vertical transform will be referred to as a vertical/horizontal transform coefficient and the reverse case will be referred to as a horizontal/vertical transform coefficient.

[Equation 4]

$$\mathbf{C}_{vh}(k,l) = \sum_{j=1}^{N} \mathbf{C}_{v}(k,j)\, \mathbf{H}_k(l,j)$$

Here, k = 1,... , N, l = 1,... , N. Referring to FIG. 5, the horizontal transform $H_k$ may be applied to the kth row.

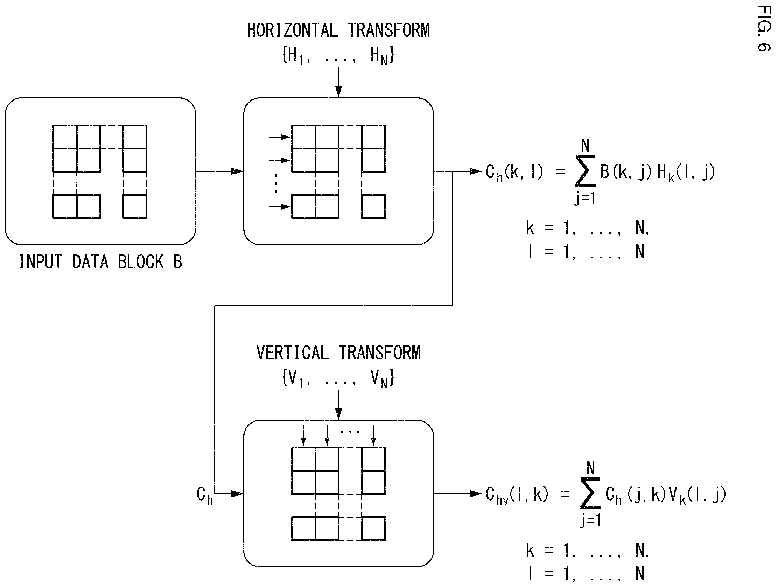

Referring to FIG. 6, the present invention illustrates an embodiment of generating a transform coefficient by first applying a horizontal transform set and then applying a vertical transform set to generate transform coefficients. For example, it may refer to a case where a value of the transform parameter set is S=0.

In case where an input data block B is given and a horizontal transform set $\{H_1, ..., H_N\}$, the horizontal transform coefficient $C_h(k,l)$ may be generated by Equation 5 below.

[Equation 5]

$$\mathbf{C}_h(k,l) = \sum_{j=1}^{N} \mathbf{B}(k,j)\, \mathbf{H}_k(l,j)$$

Here, k = 1,... , N, l = 1,... , N. Referring to FIG. 6, the horizontal transform $H_k$ may be applied to the kth row.

The horizontal transform coefficient $C_h(k,l)$ calculated by Equation 5 may be an input value for applying the vertical transform. When the vertical transform set $\{V_1, ..., V_N\}$ is applied to the horizontal transform coefficient $C_h(k,l)$, the horizontal/vertical transform coefficient $C_{hv}(l,k)$ may be generated by Equation 6 below.

[Equation 6]

$$\mathbf{C}_{hv}(l,k) = \sum_{j=1}^{N} \mathbf{C}_h(j,k)\, \mathbf{V}_k(l,j)$$

Here, k = 1,... , N, l = 1,... , N. Referring to FIG. 6, the vertical transform $V_k$ may be applied to the kth column.

Generally, $C_{vh}$ in Equation 4 and $C_{hv}$ in Equation 6 are not the same. That is, when different transforms are applied to rows and columns of an input block, different orders of the vertical and horizontal transforms may produce different transforms.

For example, in case where vertical and horizontal transforms are set to one-dimensional (1D) DCT, the embodiments of FIGS. 5 to 6 may represent a separable two-dimensional (2D) DCT.

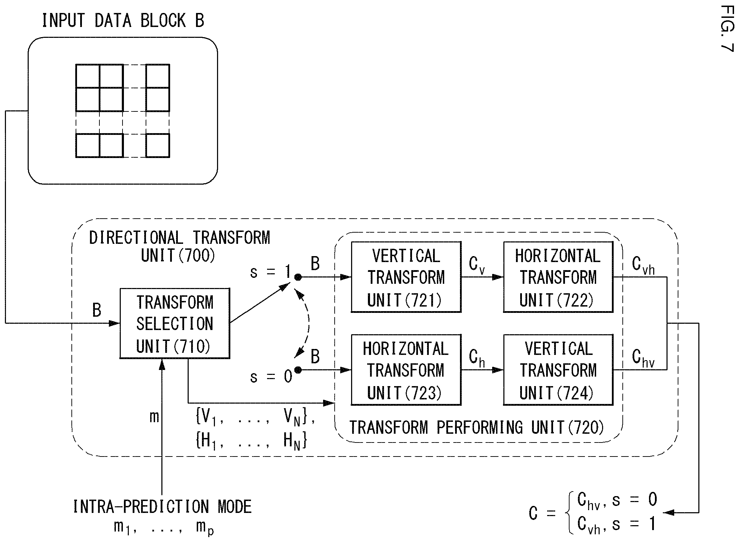

FIG. 7 is a schematic internal block diagram of a directional transform unit that performs a vertical transform and a horizontal transform according to an embodiment to which the present invention is applied.

Referring to FIG. 7, the encoder to which the present invention is applied may include a directional transform unit 700. The directional transform unit 700 may be included in or replaced with the transform unit 120 of FIG. 1 described above, but the present invention is not limited thereto and the directional transform unit 700 may be provided as a separate functional unit.

The directional transform unit 700 may include at least one of a transform selection unit 710 and a transform performing unit 720.

The directional transform unit 700 may perform a transform based on directional property of an image or a residual image.

In an embodiment, the transform selection unit 710 may select a corresponding transform based on a prediction mode. For example, when the prediction mode indicates an intra-directional mode, a horizontal transform set and a vertical transform set corresponding to the intra-directional mode may be selected. Here, the encoder and the decoder may already know the horizontal and/or vertical transform set corresponding to each prediction mode through training. Thus, the horizontal transform set and/or the vertical transform set may each correspond to any one of the predetermined transform sets.

In another example, the transform selection unit 710 may determine or select at least one of a transform order parameter, a vertical transform set, or a horizontal transform set based on additional information. For example, different vertical and horizontal transform sets may be selected for each intra-prediction mode.

Also, the transform order parameter may be selected based on the intra-prediction mode. For example, in case where the intra-prediction mode is 2, 3,... , 17, the transform order parameter S may be 1. That is, the transform order parameter may indicate the order in which the horizontal transform is applied after the vertical transform.

In the case of the intra-prediction mode, since a data variation is large in the vertical direction, preferential application of the vertical transforms may acquire a lot of energy, which may be good in terms of non-linear approximation performance.

In another example, in the case of the intra-prediction mode 18, .. , 34, the transform order parameter S may be 0. That is, the transform order parameter may indicate the order in which the vertical transform is applied after the horizontal transform.

As described above, when the transform order parameter, the vertical transform set, and the horizontal transform set are determined or selected, the transform performing unit 720 may perform a transform by applying the vertical transform set and the horizontal transform set according to the transform order parameter.

For example, when S=1, first, the vertical transform unit 721 may output the vertical transform coefficient $C_v$ by performing a vertical transform on the input data B. The horizontal transform unit 722 may output the vertical/horizontal transform coefficient $C_{vh}$ by performing a horizontal transform on the vertical transform coefficient $C_v$.

In another example, when S=0, first, the horizontal transform unit 723 may output the horizontal transform coefficient $C_h$ by performing a horizontal transform on the input data B. The vertical transform unit 724 may output the horizontal/vertical transform coefficient $C_{hv}$ by performing a vertical transform on the horizontal transform coefficient $C_h$.

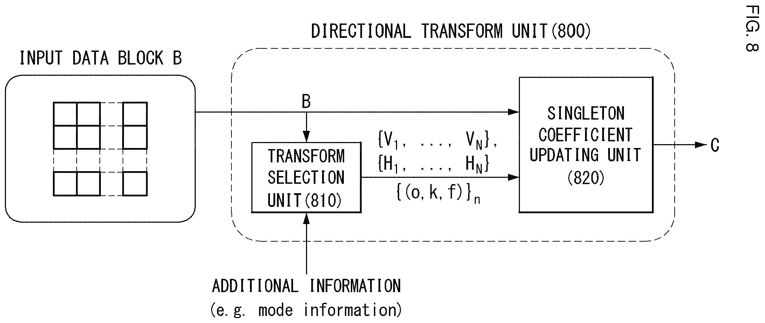

FIG. 8 is a schematic internal block diagram of a directional transform unit using singleton coefficient update according to an embodiment to which the present invention is applied.

Referring to FIG. 8, the encoder to which the present invention is applied may include a directional transform unit 800. The directional transform unit 800 may be included in or replaced with the transform unit 120 of FIG. 1, but the present invention is not limited thereto and the directional transform unit 800 may be provided as a separate functional unit.

The directional transform unit 800 may include at least one of a transform selection unit 810 and a singleton coefficient updating unit 820.

The directional transform unit 800 may perform a transform based on directional properties of an image or a residual image.

In an embodiment, the transform selection unit 810 may determine or select at least one of a transform order parameter, a vertical transform set, or a horizontal transform set based on additional information. For example, different vertical transform set and horizontal transform set may be selected for each intra-prediction mode. The embodiments described in FIG. 7 may be applied to the transform selection unit 810, and a redundant description thereof will be omitted.

The singleton coefficient updating unit 820 may update a singleton coefficient and perform a transform based on the updated singleton coefficient. Here, the singleton coefficient may refer to a single coefficient obtained based on the transform ordering parameter set.

The present invention provides a method for designing generalized incremental transforms with singleton updates (GITSU).

For example, regarding a data block $\mathbf{B} \in R^{N \times N}$, GITSU $\mathbf{T} \in R^{N2 \times N2}$ may be defined by the following transform parameter set.

- Vertical transform set: $\{\mathbf{v}_1, \mathbf{v}_2, ..., \mathbf{v}_N\}$
- Horizontal transform set: $\{\mathbf{H}_1, \mathbf{H}_2, ..., \mathbf{H}_N\}$
- Transform ordering parameter set: $\{(o,k,f)\}_n = (o_1, k_1, f_1), ..., (o_n, k_n, f_n)$

As illustrated in FIG. 8, in the present invention, input data and additional information may be used to determine global transform by selecting the vertical transform set $\{\mathbf{v}_1, \mathbf{v}_2, ..., \mathbf{v}_N\}$, the horizontal transform set $\{\mathbf{H}_1, \mathbf{H}_2, ..., \mathbf{H}_N\}$, and the transform ordering parameter set $\{(o,k,f)\}_n$, which are transform parameter sets for transform T.

The transform ordering parameter set may be determined by a series of triplets (i.e., $\{(o,k,f)\}_n$) having a legnth n, and for exmaple, the triplet $(o,k,f)$ may be defined by at lesat one of an orientation, a frequency, and a position index. Here, the triplet $(o,k,f)$ may be defined by an orientation $\in \{0,1\}$, a frequency $f \in \{1,2,..,N\}$, and a position index $k \in \{1,2,..,N\}$.

The triplet $(o,k,f)$ may be determined by an optimziation process, and in this case, the GITSU transform T may be defined by n number of cascaded singleton coefficient update steps (SCUSs).

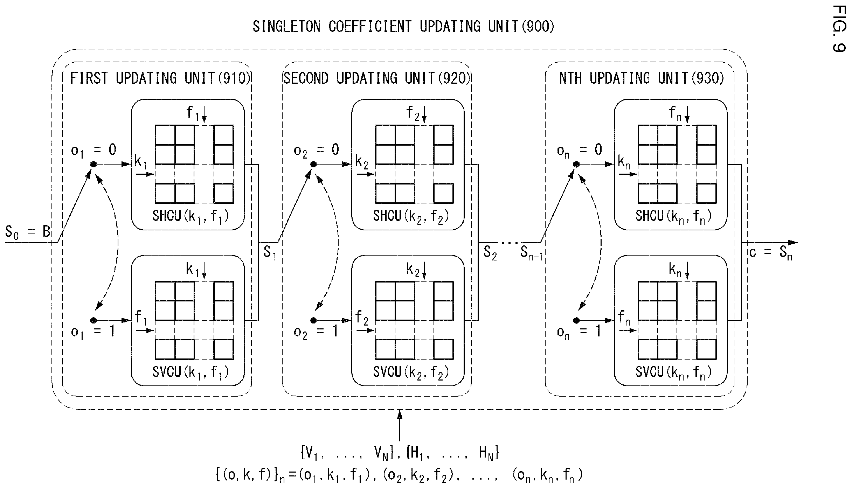

FIG. 9 is a schematic internal block diagram of a singleton coefficient updating unit to which the present invention is applied.

Referring to FIG. 9, the encoder to which the present invention is applied may include a singleton coefficient updating unit 900. The singleton coefficient updating unit 900 may be included in or replaced with the transform unit 120 of FIG. 1 described above, but the present invention is not limited thereto and the singleton coefficient updating unit 900 may be provided as a separate functional unit.

The singleton coefficient updating unit 900 may include at least one of a first updating unit 910, a second updating unit 920, and an Nth updating unit 930. For example, the GITSU transform T may be generated by cascaded singleton coefficient update procedures (SCUSs).

Referring to FIG. 9, updating units cascaded according to the transform order parameter $\{(o,k,f)\}_n$ are illustrated. Here, the updating units may each refer to a singleton coefficient update step (SCUS). The SCUS may correspond to either a singleton vertical coefficient update (SVCU) or a singleton horizontal coefficient update (SHCU) depending on a direction parameter o.

The first updating unit 910 may perform updating on the singleton vertical coefficient update (SVCU) or the singleton horizontal coefficient update (SHCU) according to a direction parameter $o_1$ with respect to input data $S_0=B$. For example, in case where the direction parameter $o_1=0$, the first updating unit 910 may perform the singleton horizontal coefficient update (SHCU), and in case where the direction parameter $o_1=1$, the first updating unit 910 may perform the singleton vertical coefficient update (SVCU). The first updating unit 910 may output $S_1$ according to the SHCU or the SVCU.

The second updating unit 920 may perform updating on the SVCU or the SHCU according to the direction parameter $o_2$ with respect to the input data $S_1$.

As described above, through the update procedure for N number of times, the singleton coefficient updating unit 900 may obtain a transform coefficient C=Sn.

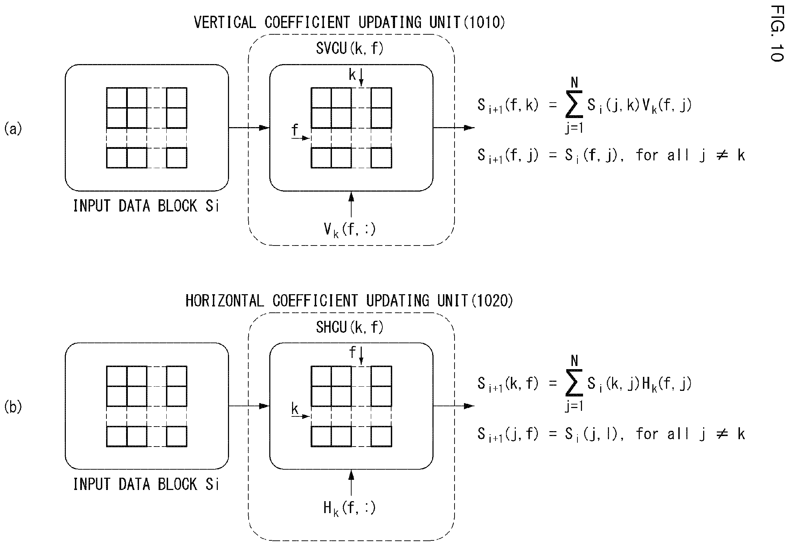

FIG. 10 illustrates an input/output relationship for cases of performing a singleton vertical coefficient update and a singleton horizontal coefficient update on a data block according to an embodiment to which the present invention is applied.

FIG. 10(a) illustrates a singleton input/output relationship according to the vertical coefficient updating unit 1010, and FIG. 10(b) illustrates a singleton input/output relationship according to the horizontal coefficient updating unit 1020.

Referring to FIG. 10(a), the vertical coefficient updating unit 1010 may apply a vertical transform $V_k$ to input data $S_i$ and update only one coefficient in a kth column using a basis vector $V_k(f,:)$ at a frequency f. This may be expressed by Equation 7 below.

## [Equation 7]

$$\mathbf{S}_{i+1}(f,k) = \sum_{j=1}^{N} \mathbf{S}_i(j,k)\, \mathbf{V}_k(f,j)$$

Here, $\mathbf{s}_{i+1}(f,j) = \mathbf{s}_i(f,j)$, for all $j \neq k$.

In another embodiment, the vertical coefficient updating unit 1010 may use a subset of basis vectors for multiple frequency update at a position k of each step, instead of applying a single basis vector.

Referring to FIG. 10(b), the horizontal coefficient updating unit 1020 may apply the horizontal transform $H_k$ to the input data $S_i$ and update only one coefficient in a kth row using the basis vector $H_k(f,:)$ at the frequency f. This may be expressed by Equation 8 below.

## [Equation 8]

$$\mathbf{S}_{i+1}(k,f) = \sum_{j=1}^{N} \mathbf{S}_i(k,j)\, \mathbf{H}_k(f,j)$$

Here, $\mathbf{s}_{i+1}(j,f) = \mathbf{s}_i(j,l)$, for all $j \neq k$.

In another embodiment, the horizontal coefficient updating unit 1020 may use a subset of basis vectors for multiple frequency updates at position k of each step, instead of applying a single basis vector.

In another embodiment, a length of the sequence of transform order parameters $\{(o,k,f)\}_n$ may be arbitrarily selected, and here, n may be an order of $N^3$ to enable sufficient singleton update performance.

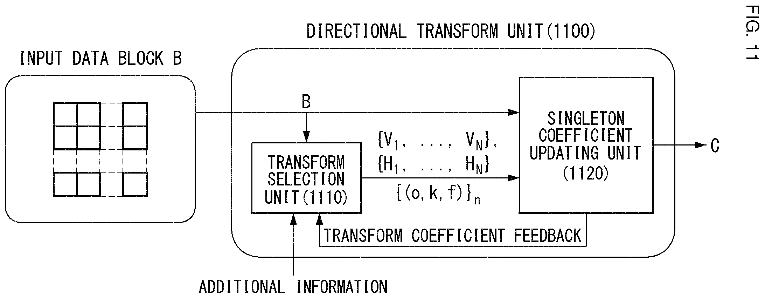

FIG. 11 is a schematic internal block diagram of a directional transform unit using transform selected based on transform coefficient feedback according to an embodiment to which the present invention is applied.

Referring to FIG. 11, the encoder to which the present invention is applied may include a directional transform unit 1100. The directional transform unit 1100 may be included in or replaced with the transform unit 120 of FIG. 1 described above, but the present invention is not limited thereto and the directional transform unit 1100 may be provided as a separate functional unit.

The directional transform unit 1100 may include at least one of a transform selection unit 1110 and a singleton coefficient updating unit 1120.

The directional transform unit 1100 may perform a transform based on at least one of additional information and transform coefficient feedback information.

In an embodiment, the transform selection unit 1110 may determine or select at least one of a transform order parameter, a vertical transform set, or a horizontal transform set based on at least one of additional information and transform coefficient feedback information. Here, the transform coefficient feedback information may include at least one of an updated singleton coefficient and transform coefficient pattern information, and the additional information may include at least one of a prediction mode or block feature information.

For example, the transform selection unit 1110 may determine or select at least one of a transform order parameter, a vertical transform set, and a horizontal transform set based on the transform coefficient pattern information so as to allow a more flexible transform selection.

Alternatively, the transform selection unit 1110 may determine or select at least one of the transform order parameter, the vertical transform set, and the horizontal transform set based on the block characteristic information extracted from the reference blocks through low-level processing (e.g., a boundary detection, etc.).

The singleton coefficient updating unit 1120 may update the singleton coefficient and perform a transform based on the updated singleton coefficient. Here, the embodiments described with reference to FIGS. 8 to 10 may be applied, and a redundant description will be omitted.

Also, the embodiments described in this disclosure may be applied to the embodiment of FIG. 11.

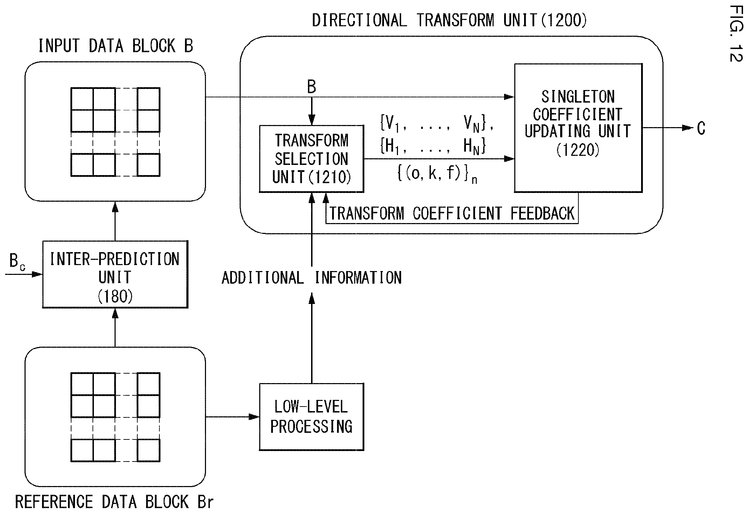

FIG. 12 illustrates a schematic internal block diagram of a directional transform unit using transform selected based on additional information of a reference block used in inter-prediction according to an embodiment to which the present invention is applied.

Referring to FIG. 12, the encoder to which the present invention is applied may include a directional transform unit 1200. The directional transform unit 1200 may be included in or replaced with the transform unit 120 of FIG. 1, but the present invention is not limited thereto and the directional transform unit 1200 may be provided as a separate functional unit.

The directional transform unit 1200 may include at least one of a transform selection unit 1210 and a singleton coefficient updating unit 1220.

The directional transform unit 1200 may perform a transform based on at least one of the additional information or transform coefficient feedback information.

In an embodiment, the transform selection unit 1210 may determine or select at least one of a transform order parameter, a vertical transform set, or a horizontal transform set based on at least one of additional information and transform coefficient feedback information.

For example, the transform coefficient feedback information may include at least one of an updated singleton coefficient and transform coefficient pattern information, and the additional information may include at least one of a prediction mode, reference block information used for inter-prediction, and feature information.

For example, the prediction mode may indicate an intra-prediction mode or an inter-prediction mode, and the reference block information may include at least one of a reference index, a motion vector, and transform information of a reference block. The transform information of the reference block may include at least one of transform unit size information, transform coefficient information, and a transform parameter set.

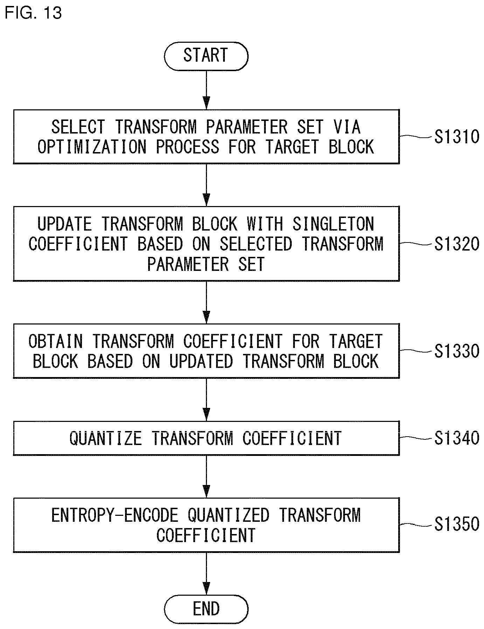

FIG. 13 is a flow chart illustrating a method of performing transform using singleton coefficient update according to an embodiment to which the present invention is applied.

The present invention provides a method for improving coding efficiency through a novel transform design, and further provides a method for designing low-complexity, non-isotropic transforms using singleton update.

In an embodiment, the present invention provides a method for updating a transform block with a singleton coefficient based on a transform parameter set.

In another embodiment, the present invention provides a method of performing transform on each row and column within a block according to specific transform order.

First, the encoder may select a transform parameter set through an optimization process for a target block (S1310). Here, the transform parameter set may include at least one of a vertical transform set, a horizontal transform set, or a transform ordering parameter set. In an embodiment, the transform ordering parameter set may be selected based on mode information of a target block. For example, in case where the mode information indicates the horizontal direction, the vertical transform is applied first, and in case where the mode information indicates the vertical direction, the horizontal transform may be applied first.

The encoder may update the transform block with a singleton coefficient based on the selected transform parameter set (S1320). Here, the singleton coefficient represents a single coefficient obtained based on the transform ordering parameter set.

In another example, the transform block may be updated based on another transform ordering parameter set.

In another example, the updating step S1320 may be repeatedly performed by the number of parameters included in the transform parameter set.

The encoder may obtain a transform coefficient for the target block based on the updated transform block (S1330).

The encoder may quantize the transform coefficients (S1340), and entropy-encodes the quantized transform coefficients (S1350).

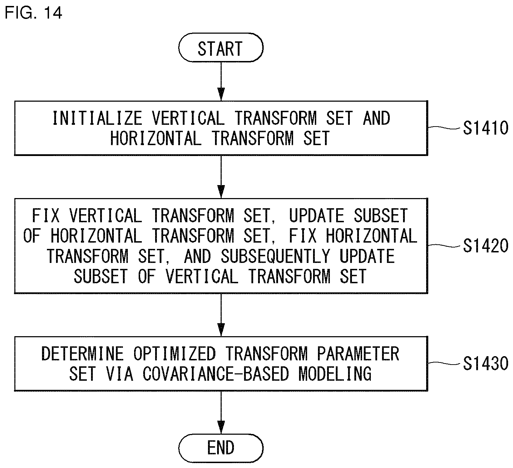

FIG. 14 is a flow chart illustrating a method for determining a transform parameter set using an optimization process, to which the present invention is applied.

The present invention provides a method for determining or selecting a transform parameter set through an optimization process for a target block. For example, the optimization process may refer to rate-distortion optimization.

The encoder may first initialize a vertical transform set and a horizontal transform set (S1410).

The encoder may fix the vertical transform set and update a subset of the horizontal transform set, and then fix the horizontal transform set and update a subset of the vertical transform set (S1420).

Also, the encoder may determine an optimized transform parameter set via covariance-based modeling (S1430). Here, update order of the vertical transform set and the horizontal transform set may be selected based on mode information.

Hereinafter, an optimization framework will be described as an embodiment of the present invention. In order to determine the vertical transform set $\{V_1, V_2, ... , V_N\}$ and the horizontal transform set $\{H_1, H_2, ... , H_N\}$, the present invention may use optimization issues having different metrics.

For example, it is assumed that there are L number of different block data classes modeled as zero-mean multi-variance Gaussian random vectors having covariances $K_1, K_2, ... , K_L$. The goal is to find an optimal transform T from a rate-distortion perspective. For a single model having a covariance K, one typical measurement is based on how well the transform T (where the rows are the basis vectors) diagonalizes covariance K. One commonly used metric may be referred to as a coding gain generated as expressed by Equation 9 below.

[Equation 9]

$$cg(\mathbf{T}, \mathbf{K}) = \left( \frac{\det(ddiag(\mathbf{K}))}{\det(ddiag(\mathbf{TKT}^t))} \right)^{1/N^2} \quad cg(\mathbf{T}, \mathbf{K}) = \left( \frac{\det(ddiag(\mathbf{K}))}{\det(ddiag(\mathbf{TKT}^t))} \right)^{1/N^2}$$

Here, det(K) is a determinant of K and ddiag(K) operator generates a diagonal matrix based on diagonal elements of K. Intuitively, a greater coding gain metric may refer to a better transform T. In order to search for an optimal transform for the multiple (L) covariance model, a maximization problem of Equation 10 below may be solved under orthogonality constraint $\mathbf{TT}^t = \mathbf{I}$.

[Equation 10]

$$\mathbf{T}^* = \underset{\{\mathbf{T} | \mathbf{TT}^t = \mathbf{I}\}}{argmax} \sum_{i=1}^{L} \log(cg(\mathbf{T}, \mathbf{K}_i))$$

Here, the metric may measure log-sum coding gains regarding every $K_i$, i= 1,2, ..., L.

In an embodiment, a graph-based modeling (e.g., Gaussian Markov Random Fields) may be generated by replacing the covariance-based models with models parameterized by graphical Laplacian. For example, when a set of graph Laplacians $\{\mathbf{L}\}_{i=1}^{L}$ (i.e., graph-based models) is given, covariances such as $\mathbf{K}_i = \mathbf{L}_i^+$ may be defined, and here, $L^+$ represents pseudo-inverse of L.

Equation 10 is for optimizing a global transform matrix T, and the following procedures may be repeatedly performed to design transform sets.

First, the vertical transform set and the horizontal transform set may be initialized based on predetermined information or using a unit matrix.

Second, the vertical transform set may be fixed and a subset of the horizontal transform set may be updated.

Third, the horizontal transform set may be fixed and a subset of the vertical transform set may be updated.

Fourth, the process, starting from the second step, may be repeatedly performed until converged (based on the coding gain metric defined above).

In an embodiment, the second and third steps may be exchanged. The exchange may induce updating the vertical transform set first and then updating the horizontal transform set. In this manner, it is important to determine the update order of the transform sets.

In an embodiment, the update order may be selected or determined based on additional information or input data. For example, since the image model has a sharp horizontal boundary (i.e., a large vertical change) and most of the energy will be concentrated on the vertical coefficients, it is effective to start the vertical transform update first in this case. That is, it is more effective to optimize the vertical transform first and then update the horizontal transforms.

In an embodiment, the optimization procedure may be used to approximate a non-separable basis O by minimizing a squared error as expressed by Equation 11 below.

[Equation 11]

$$\{V_1, \ldots, V_N\}^*, \{H_1, \ldots, H_N\}^* = \underset{\substack{\{V_1, V_2, \ldots, V_N\} \\ \{H_1, H_2, \ldots, H_N\}}}{arg\,min} \| T(V_1, \ldots, V_N, H_1, \ldots, H_N) - O \|_F$$

Here, the subscript $F$ represents the Frobenius norm.

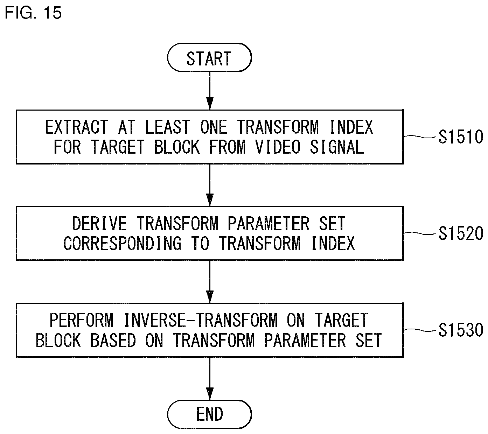

FIG. 15 is a flow chart illustrating a method of performing inverse transform based on a transform to which a singleton coefficient update has been applied according to an embodiment to which the present invention is applied.

The decoder may extract at least one transform index regarding a target block from a video signal (S1510).

The decoder may derive a transform parameter set corresponding to the transform index (S1520). Here, the transform parameter set may include at least one of a vertical transform set, a horizontal transform set, or a transform ordering parameter set.

In another embodiment, the decoder may derive the transform ordering parameter set based on mode information of the target block, without extracting the transform index.

The decoder may perform inverse transform on the target block based on the transform parameter set (S1530). Here, the transform applied during the inverse transform may be transform to which the update of the singleton coefficient has been applied. Here, the singleton coefficient represents a single coefficient obtained based on the transform ordering parameter set.

As described above, the embodiments explained in the present invention may be implemented and performed on a processor, a micro-processor, a controller or a chip. For example, functional modules explained in FIG. 1, FIG. 2 and FIGS. 6~11 may be implemented and performed on a computer, a processor, a microprocessor, a controller or a chip.

Also, the decoder and the encoder to which the present invention is applied may be included in a multimedia broadcasting transmission/reception apparatus, a mobile communication terminal, a home cinema video apparatus, a digital cinema video apparatus, a surveillance camera, a video chatting apparatus, a real-time communication apparatus, such as video communication, a mobile streaming apparatus, a storage medium, a camcorder, a VoD service providing apparatus, an Internet streaming service providing apparatus, a three-dimensional 3D video apparatus, a teleconference video apparatus, and a medical video apparatus and may be used to code video signals and data signals.

Furthermore, the decoding/encoding method to which the present invention is applied may be produced in the form of a program that is to be executed by a computer and may be stored in a computer-readable recording medium. Multimedia data having a data structure according to the present invention may also be stored in computer-readable recording media. The computer-readable recording media include all types of storage devices in which data readable by a computer system is stored. The computer-readable recording media may include a BD, a USB, ROM, RAM, CD-ROM, a magnetic tape, a floppy disk, and an optical data storage device, for example. Furthermore, the computer-readable recording media includes media implemented in the form of carrier waves, e.g., transmission through the Internet. Furthermore, a bit stream generated by the encoding method may be stored in a computer-readable recording medium or may be transmitted over wired/wireless communication networks.

[Industrial Applicability]

The exemplary embodiments of the present invention have been disclosed for illustrative purposes, and those skilled in the art may improve, change, replace, or add various other embodiments within the technical spirit and scope of the present invention disclosed in the attached claims.

**Claims**

1. A method for encoding a video signal, comprising:

   selecting a transform parameter set via an optimization process for a target block, the transform parameter set including a vertical transform set, a horizontal transform set and a transform ordering parameter set;
   updating a transform block with a singleton coefficient based on the selected transform parameter set, the singleton coefficient indicating a single coefficient obtained by using the transform ordering parameter set;
   obtaining a transform coefficient for the target block based on the updated transform block;
   quantizing the transform coefficient; and
   entropy-encoding the quantized transform coefficient.

2. The method of claim 1,
   wherein the transform ordering parameter set is comprised of at least one of a direction parameter, a position index parameter or a frequency parameter.

3. The method of claim 1,
   wherein the transform ordering parameter set is selected based on mode information of the target block.

4. The method of claim 3,
   wherein if the mode information indicates a horizontal direction, a vertical transform is first applied, and if the mode information indicates a vertical direction, a horizontal transform is first applied.

5. The method of claim 1,
   wherein the updating step further comprises :

   updating the transform block based on another transform ordering parameter set,
   wherein the transform coefficient is obtained based on the updated transform block.

6. The method of claim 1,
   wherein the updating step is performed repeatedly as a number of parameters included in the transform parameter set.

7. The method of claim 1,
   wherein the optimization process comprises :

   initializing the vertical transform set and the horizontal transform set;
   fixing the horizontal transform set and updating a subset of the vertical transform set, after fixing the vertical transform set and updating a subset of the horizontal transform set; and
   determining an optimized transform parameter set via a covariance-based modeling.

8. The method of claim 7,
   wherein the updating order for the vertical transform set and the horizontal transform set is selected based on mode information.

9. A method for decoding a video signal, comprising:

   extracting at least one transform index for a target block from the video signal;
   deriving a transform parameter set corresponding to the transform index, the transform parameter set including a vertical transform set, a horizontal transform set and a transform ordering parameter set; and
   performing an inverse-transform for the target block based on the transform parameter set.

10. The method of claim 9,
    wherein the transform ordering parameter set is comprised of at least one of a direction parameter, a position index parameter and a frequency parameter.

11. The method of claim 9,
    wherein the transform ordering parameter set is selected based on mode information of the target block.

**12.** The method of claim 11,
wherein if the mode information indicates a horizontal direction, a vertical transform is firstly applied, and
if the mode information indicates a vertical direction, a horizontal transform is firstly applied.

**13.** An apparatus for encoding a video signal, comprising:

a transform selection unit configured to select a transform parameter set via an optimization process for a target block, the transform parameter set including a vertical transform set, a horizontal transform set and a transform ordering parameter set;

an updating unit configured to update a transform block with a singleton coefficient based on the selected transform parameter set, the singleton coefficient indicating a single coefficient obtained by using the transform ordering parameter set;

a transform performing unit configured to obtain a transform coefficient for the target block based on the updated transform block;

a quantization unit configured to quantize the transform coefficient; and

an entropy-encoding unit configured to entropy-encode the quantized transform coefficient.

**14.** An apparatus for decoding a video signal, comprising:

a parsing unit configured to extract at least one transform index for a target block from the video signal; and

an inverse-transform unit configured to derive a transform parameter set corresponding to the transform index, and perform an inverse-transform for the target block based on the transform parameter set,

wherein the transform parameter set includes a vertical transform set, a horizontal transform set and a transform ordering parameter set.

FIG. 1

**FIG. 2**

BITSTREAM

**DECODER (200)**

ENTROPY-
DECODING
UNIT (210)

INVERSE
QUANTIZATION
UNIT (220)

INVERSE
TRANSFORM
UNIT (230)

INTER-
PREDICTION
UNIT (260)

INTRA-
PREDICTION
(265)

DECODED PICTURE
BUFFER (DPB)
(250)

FILTERING
UNIT
(240)

RECONSTRUCTED
IMAGE

FIG. 3

LEVEL 0 ----------------------------●----------------------------

LEVEL 1 ○----------------○--------●--------------○
     a           b                    j

LEVEL 2 ------------------○----●--------○--------○
                    c                h     i

LEVEL 3 -------------------○----○----○----○-------
                    d    e    f    g

(A)

| a | | b | |
|---|---|---|---|
| c | d | e | j |
| | f | g | |
| h | i | | |

(B)

FIG. 4

EP 3 334 163 A1

(a)

INPUT DATA BLOCK B

Vertical

VERTICAL TRANSFORM
$\{V_1, \ldots, V_N\}$

$$C_v(l,k) = \sum_{j=1}^{N} B(j,k) V_k(l,j)$$

$$k = 1, \ldots, N,$$
$$l = 1, \ldots, N$$

(b)

INPUT DATA BLOCK B

Horizontal

HORIZONTAL TRANSFORM
$\{H_1, \ldots, H_N\}$

$$C_h(k,l) = \sum_{j=1}^{N} B(k,j) H_k(l,j)$$

$$k = 1, \ldots, N,$$
$$l = 1, \ldots, N$$

20

FIG. 5

EP 3 334 163 A1

VERTICAL TRANSFORM
$\{V_1, \ldots, V_N\}$

INPUT DATA BLOCK B

$$C_v(l, k) = \sum_{j=1}^{N} B(j, k) V_k(l, j)$$

$$k = 1, \ldots, N,$$
$$l = 1, \ldots, N$$

HORIZONTAL TRANSFORM
$\{H_1, \ldots, H_N\}$

$C_v$

$$C_{vh}(k, l) = \sum_{j=1}^{N} C_v(k, j) H_k(l, j)$$

$$k = 1, \ldots, N,$$
$$l = 1, \ldots, N$$

FIG. 6

EP 3 334 163 A1

HORIZONTAL TRANSFORM
$\{H_1, \ldots, H_N\}$

INPUT DATA BLOCK B

$$C_h(k, l) = \sum_{j=1}^{N} B(k, j) H_k(l, j)$$

$k = 1, \ldots, N,$
$l = 1, \ldots, N$

VERTICAL TRANSFORM
$\{V_1, \ldots, V_N\}$

$C_h$

$$C_{hv}(l, k) = \sum_{j=1}^{N} C_h(j, k) V_k(l, j)$$

$k = 1, \ldots, N,$
$l = 1, \ldots, N$

FIG. 7

INPUT DATA BLOCK B

DIRECTIONAL TRANSFORM UNIT (700)

TRANSFORM SELECTION UNIT (710)

$s = 1$    B

$s = 0$    B

$\{V_1, \ldots, V_N\},$
$\{H_1, \ldots, H_N\}$

VERTICAL TRANSFORM UNIT (721)    $C_v$    HORIZONTAL TRANSFORM UNIT (722)    $C_{vh}$

HORIZONTAL TRANSFORM UNIT (723)    $C_h$    VERTICAL TRANSFORM UNIT (724)    $C_{hv}$

TRANSFORM PERFORMING UNIT (720)

$C = \begin{cases} C_{hv}, & s = 0 \\ C_{vh}, & s = 1 \end{cases}$

INTRA-PREDICTION MODE
$m_1, \ldots, m_p$

m

FIG. 8

DIRECTIONAL TRANSFORM UNIT (800)

INPUT DATA BLOCK B

B → TRANSFORM SELECTION UNIT (810)

ADDITIONAL INFORMATION (e. g. mode information)

$\{V_1, \ldots, V_N\}$, $\{H_1, \ldots, H_N\}$

$\{(o, k, f)\}_n$

SINGLETON COEFFICIENT UPDATING UNIT (820)

C

SINGLETON COEFFICIENT UPDATING UNIT(900)

FIRST UPDATING UNIT(910)   SECOND UPDATING UNIT(920)   NTH UPDATING UNIT(930)

$S_0 = B$

$o_1 = 0$   $k_1$   $f_1 \downarrow$   SHCU$(k_1, f_1)$
$o_1 = 1$   $f_1$   $k_1 \downarrow$   SVCU$(k_1, f_1)$

$S_1$

$o_2 = 0$   $k_2$   $f_2 \downarrow$   SHCU$(k_2, f_2)$
$o_2 = 1$   $f_2$   $k_2 \downarrow$   SVCU$(k_2, f_2)$

$S_2$   $S_{n-1}$

$o_n = 0$   $k_n$   $f_n \downarrow$   SHCU$(k_n, f_n)$
$o_n = 1$   $f_n$   $k_n \downarrow$   SVCU$(k_n, f_n)$

$c = S_n$

$\{V_1, \ldots, V_N\}, \{H_1, \ldots, H_N\}$

$\{(o, k, f)\}_n = (o_1, k_1, f_1), (o_2, k_2, f_2), \ldots, (o_n, k_n, f_n)$

FIG. 9

FIG. 10

FIG. 11

EP 3 334 163 A1

DIRECTIONAL TRANSFORM UNIT(1100)

INPUT DATA BLOCK B

B

TRANSFORM
SELECTION
UNIT(1110)

$\{V_1, \ldots, V_N\}$,
$\{H_1, \ldots, H_N\}$
$\{(o, k, f)\}_n$

SINGLETON
COEFFICIENT
UPDATING UNIT
(1120)

C

TRANSFORM COEFFICIENT FEEDBACK

ADDITIONAL INFORMATION

INPUT DATA BLOCK B

DIRECTIONAL TRANSFORM UNIT(1200)

B

TRANSFORM SELECTION UNIT(1210)

$\{V_1, \ldots, V_N\}$, $\{H_1, \ldots, H_N\}$

$\{(o, k, f)\}_n$

SINGLETON COEFFICIENT UPDATING UNIT (1220)

C

TRANSFORM COEFFICIENT FEEDBACK

$B_C$

INTER-PREDICTION UNIT (180)

ADDITIONAL INFORMATION

LOW-LEVEL PROCESSING

REFERENCE DATA BLOCK Br

FIG. 12

FIG. 13

```
                    ┌─────────────┐
                    │    START    │
                    └─────────────┘
                           │
                           ▼
    ┌──────────────────────────────────────────┐
    │   SELECT TRANSFORM PARAMETER SET VIA       │──── S1310
    │   OPTIMIZATION PROCESS FOR TARGET BLOCK    │
    └──────────────────────────────────────────┘
                           │
                           ▼
    ┌──────────────────────────────────────────┐
    │   UPDATE TRANSFORM BLOCK WITH SINGLETON    │──── S1320
    │   COEFFICIENT BASED ON SELECTED TRANSFORM  │
    │                PARAMETER SET               │
    └──────────────────────────────────────────┘
                           │
                           ▼
    ┌──────────────────────────────────────────┐
    │   OBTAIN TRANSFORM COEFFICIENT FOR TARGET  │──── S1330
    │   BLOCK BASED ON UPDATED TRANSFORM BLOCK   │
    └──────────────────────────────────────────┘
                           │
                           ▼
    ┌──────────────────────────────────────────┐
    │      QUANTIZE TRANSFORM COEFFICIENT        │──── S1340
    └──────────────────────────────────────────┘
                           │
                           ▼
    ┌──────────────────────────────────────────┐
    │   ENTROPY-ENCODE QUANTIZED TRANSFORM       │──── S1350
    │                COEFFICIENT                 │
    └──────────────────────────────────────────┘
                           │
                           ▼
                    ┌─────────────┐
                    │     END     │
                    └─────────────┘
```

FIG. 14

```
                    ( START )
                        │
                        ▼
┌──────────────────────────────────────────┐
│   INITIALIZE VERTICAL TRANSFORM SET AND   │──S1410
│       HORIZONTAL TRANSFORM SET            │
└──────────────────────────────────────────┘
                        │
                        ▼
┌──────────────────────────────────────────┐
│  FIX VERTICAL TRANSFORM SET, UPDATE SUBSET│
│ OF HORIZONTAL TRANSFORM SET, FIX HORIZONTAL│──S1420
│  TRANSFORM SET, AND SUBSEQUENTLY UPDATE   │
│     SUBSET OF VERTICAL TRANSFORM SET      │
└──────────────────────────────────────────┘
                        │
                        ▼
┌──────────────────────────────────────────┐
│   DETERMINE OPTIMIZED TRANSFORM PARAMETER │──S1430
│     SET VIA COVARIANCE-BASED MODELING     │
└──────────────────────────────────────────┘
                        │
                        ▼
                    (  END  )
```

FIG. 15

```
                    ( START )
                        |
                        v
  +-----------------------------------------+
  |   EXTRACT AT LEAST ONE TRANSFORM INDEX  |___ S1510
  |     FOR TARGET BLOCK FROM VIDEO SIGNAL  |
  +-----------------------------------------+
                        |
                        v
  +-----------------------------------------+
  |     DERIVE TRANSFORM PARAMETER SET      |___ S1520
  |    CORRESPONDING TO TRANSFORM INDEX     |
  +-----------------------------------------+
                        |
                        v
  +-----------------------------------------+
  |    PERFORM INVERSE-TRANSFORM ON TARGET  |___ S1530
  |   BLOCK BASED ON TRANSFORM PARAMETER SET|
  +-----------------------------------------+
                        |
                        v
                    (  END  )
```

## INTERNATIONAL SEARCH REPORT

| | International application No. |
|---|---|
| | **PCT/KR2016/008707** |

**A.    CLASSIFICATION OF SUBJECT MATTER**

*H04N 19/90(2014.01)i, H04N 19/124(2014.01)i, H04N 19/176(2014.01)i, H04N 19/91(2014.01)i, H04N 19/44(2014.01)i, H04N 19/13(2014.01)i, H04N 19/105(2014.01)i*

According to International Patent Classification (IPC) or to both national classification and IPC

**B.    FIELDS SEARCHED**

Minimum documentation searched (classification system followed by classification symbols)

H04N 19/90; H04W 84/18; H04N 7/40; H04N 19/60; H04N 19/103; H04N 19/126; H04N 19/147; H04N 19/50; H04N 19/124; H04N 19/176; H04N 19/91; H04N 19/44; H04N 19/13; H04N 19/105

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: block, optimization, conversion, order

**C.    DOCUMENTS CONSIDERED TO BE RELEVANT**

| Category* | Citation of document, with indication, where appropriate, of the relevant passages | Relevant to claim No. |
|---|---|---|
| X | KR 10-2012-0060914 A (HUAWEI TECHNOLOGIES CO., LTD.) 12 June 2012<br>See paragraphs [0051]-[0064], [0091]-[0094]; claim 1; and figures 2, 4-5. | 1-14 |
| A | KR 10-2010-0018191 A (SK TELECOM CO., LTD.) 17 February 2010<br>See paragraphs [0022]-[0037]; and figures 3-4. | 1-14 |
| A | US 2012-0014289 A1 (ANTONIO, Ortega et al.) 19 January 2012<br>See abstract; and paragraphs [0087]-[0089]. | 1-14 |
| A | US 2015-0189283 A1 (WANG, Yao) 02 July 2015<br>See abstract; paragraphs [0041]-[0051]; and figure 3. | 1-14 |
| A | US 2012-0236929 A1 (LIU, Wei) 20 September 2012<br>See abstract; paragraphs [0052]-[0059]; and figures 1A-1B. | 1-14 |

☐ Further documents are listed in the continuation of Box C.    ☒ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 23 NOVEMBER 2016 (23.11.2016) | **24 NOVEMBER 2016 (24.11.2016)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (January 2015)

INTERNATIONAL SEARCH REPORT
Information on patent family members

| International application No. |
| --- |
| **PCT/KR2016/008707** |

| Patent document cited in search report | Publication date | Patent family member | Publication date |
| --- | --- | --- | --- |
| KR 10-2012-0060914 A | 12/06/2012 | AU 2010-310286 A1<br>AU 2010-310286 B2<br>CN 102045560 A<br>CN 102045560 B<br>EP 2493197 A1<br>KR 10-1481642 B1<br>US 2012-0201303 A1<br>WO 2011-047579 A1 | 28/04/2011<br>01/05/2014<br>04/05/2011<br>07/08/2013<br>29/08/2012<br>22/01/2015<br>09/08/2012<br>28/04/2011 |
| KR 10-2010-0018191 A | 17/02/2010 | KR 10-1359496 B1 | 11/02/2014 |
| US 2012-0014289 A1 | 19/01/2012 | US 8855011 B2 | 07/10/2014 |
| US 2015-0189283 A1 | 02/07/2015 | NONE | |
| US 2012-0236929 A1 | 20/09/2012 | US 8861593 B2 | 14/10/2014 |

Form PCT/ISA/210 (patent family annex) (January 2015)